# EUROPEAN PATENT SPECIFICATION

(11) **EP 1 350 405 B1**
(45) Date of publication and mention of the grant of the patent: **15.09.2004**
(21) Application number: 02722024.3
(22) Date of filing: 10.01.2002
(51) Int. Cl.: H04Q 7/34

(54) **APPARATUS AND METHOD FOR VERIFYING ACCESS PROCEDURE TO MOBILE TELEPHONY NETWORKS THROUGH SIM CARDS**
VORRICHTUNG UND VERFAHREN ZUR ÜBERPRÜFUNG DES ZUGRIFFSVERFAHRENS IN MOBILFUNKKOMMUNIKATIONS-NETZWERKEN DURCH SIM-KARTEN
APPAREIL ET METHODE DE VERIFICATION DE LA PROCEDURE D'ACCES AUX RESEAUX DE TELEPHONIE MOBILE AU MOYEN DES CARTES SIM

(30) Priority: 12.01.2001 IT PA20010002
(43) Date of publication of application: 08.10.2003
(73) Proprietor: Simtel S.P.A., 50129 Firenze (IT)
(72) Inventor: ANDREINI, Enrico, I-50141 Firenze (IT)
(74) Representative: Gritschneder, Martin, Dipl.-Phys.
(86) International application number: PCT/EP2002/000327
(87) International publication number: WO 2002/069656

(56) References cited:
- DE-A- 10 011 986
- DE-C- 19 620 164
- DE-C- 19 831 929

## Description

### FIELD OF THE INVENTION

The present invention concerns an apparatus, and corresponding method, for verifying the procedure to access mobile telephony networks through SIM cards.

### DESCRIPTION OF THE PRIOR ART

The great part of the telephones radio-connected to peripheral stations of mobile telephony networks operate, as known, using SIM (Subscriber Identity Module) cards inserted in the telephone sets.

A card is activated by a certain phone service supplier at the moment in which a user asks for the telephonic service offered by that supplier; a new card is so inscribed to a new user.

To enlarge as much as possible the coverage of the service, even beyond the limits of the network area directly managed by the phone service supplier, sub-supply agreements take place between the various phone service suppliers in order to avoid drawbacks or limitations for the users.

When, that is, a certain user of a mobile telephony network leaves an area where the telephony network of a first phone service supplier operates and enters an area where said network does not operate and a second supplier's telephony network operates, an authentication procedure starts in blind mode. By this procedure, substantially, it is detected if the user's card belongs to a telephone service supplier which has an agreement with the above second supplier; then, connecting to the first telephone service supplier, it is verified that the user is enabled to access the service, and, finally, the technical parameters needed to handle the communications, instead of the first supplier, are acquired.

It is evident to everyone how appropriately each phone service supplier has to verify the above procedure to work efficiently inside his own network area, not only when he activates the sub-supply of the service, but carefully and often, during the providing of the above sub-supply service, from the most locations available in the managed area, according to the different available kinds of connections, and whatever could be the communication type (voice message, alphanumeric message, data transmission, or other possible kind of transmission or required services).

At the present time the above verification is done, as regards each service supplier which the first supplier has an agreement with, by placing the relating sample card in a mobile telephone and performing verification calls from various locations in the managed area. Such a system is disclosed in document DE 198 31 929.

Since each service supplier emits, for obvious reasons, the least needed amount of sample cards, generally one single card for each supplier which he has an agreement with, we can easily infer that said verifications are extremely slow and troubled, not as much due to their complexity as to the logistic problems which come from the above limitation.

### SUMMARY OF THE INVENTION

Main aim of this invention is to propose an apparatus, and corresponding method, for verifying the procedure to access mobile telephony networks through SIM cards overcoming the limitation of low availability of cards itself and the need of placing them at the various locations of the managed network area as defined in independent apparatus claim 1 and independent method claim 4.

In this way, as we will see, we can use the mobile telephony network to transmit parameters stored in the SIM cards on which to execute the verifications, so we are free of positioning the peripheral devices for verification performing in whatever location of the geographic area where a certain mobile telephony network operates.

Another advantageous feature is the possibility of performing verifications without having to bring the SIM cards to the various locations of the managed telephony network, but just requesting the verifications by telematic lines, so clearly saving time and resources, and even getting automatic production of verifications databases, helpful for later queries and checking activities.

Further advantages come from the effectiveness of the verifications, which can be automatically performed whenever desired.

### BRIEF DESCRIPTION OF THE DRAWINGS

However, for a better understanding of the above-mentioned advantages and characteristics of the present invention, this will now be described by way of an embodiment example, with reference to the accompanying drawings, in which:
- -figure 1 schematically shows the arrangement of the components of an apparatus according to the present invention in an integrated set of public land mobile networks and public switching telephony networks;
- -figure 2 shows a block diagram of one of the components of the apparatus of fig. 1;
- figure 3 shows a flow chart of the steps of a method according to the present invention.

### DESCRIPTION OF PREFERRED EMBODIMENTS

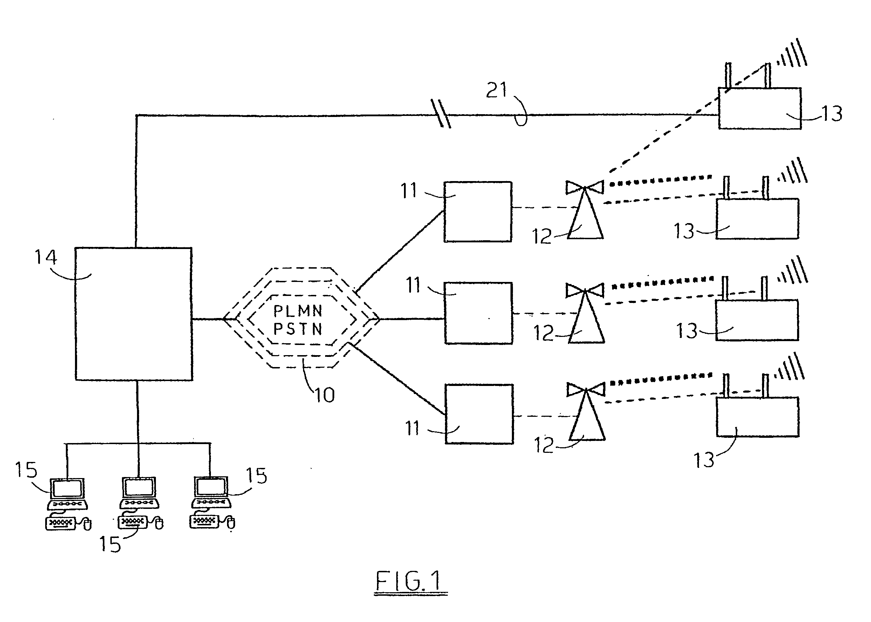

Referring first to fig.1, there is, very schematically shown, a whole, 10, of telephony networks which could be both public switching telephony networks (PSTN) and public land mobile networks (PLMN), usually interacting between themselves. Switching stations of said whole 10, are referred as 11; they interface the mobile telephony networks and the fixed telephony networks, and are named Mobile Switching Center (MSC).

From these MSC, 11, the mobile telephony networks branch out. In fig.1 just the terminal stations, 12, of said networks are shown, for the simplicity of the representation. Said terminal stations are named Base Transmitting Stations (BTS) and, as known, constitute the core of the cells, or geographic areas, which compose the zone covered by a mobile telephony network.

In the above general scheme, peripheral devices for vending the procedure to access mobile telephony networks through SIM cards are referred as 13.

Said devices comprise, as better seen in the following, two radio transmitting and receiving units, or, alternatively, one unit apt to transmit and receive via radio and one unit apt to transmit and receive through dedicated digital lines.

The general scheme of fig.1 is completed with a central electronic unit, 14, which is apt to:
- house all the SIM cards on which to execute the verifications,
- read the parameters stored in said cards,
- transmit said parameters and the instructions for performing the verifications to the peripheral devices, 13,
- receive from these ones said parameters suitably updated upon verifications,
- store the updated parameters in the SIM cards housed in it, and, finally,
- receive and store results of the verifications performed by the peripheral devices.

All the above happens upon verification requests which come to said central electronic unit through remote terminals, 15, connected to it and generally associated to the phone service suppliers of the various networks, which have sub-service agreements between them.

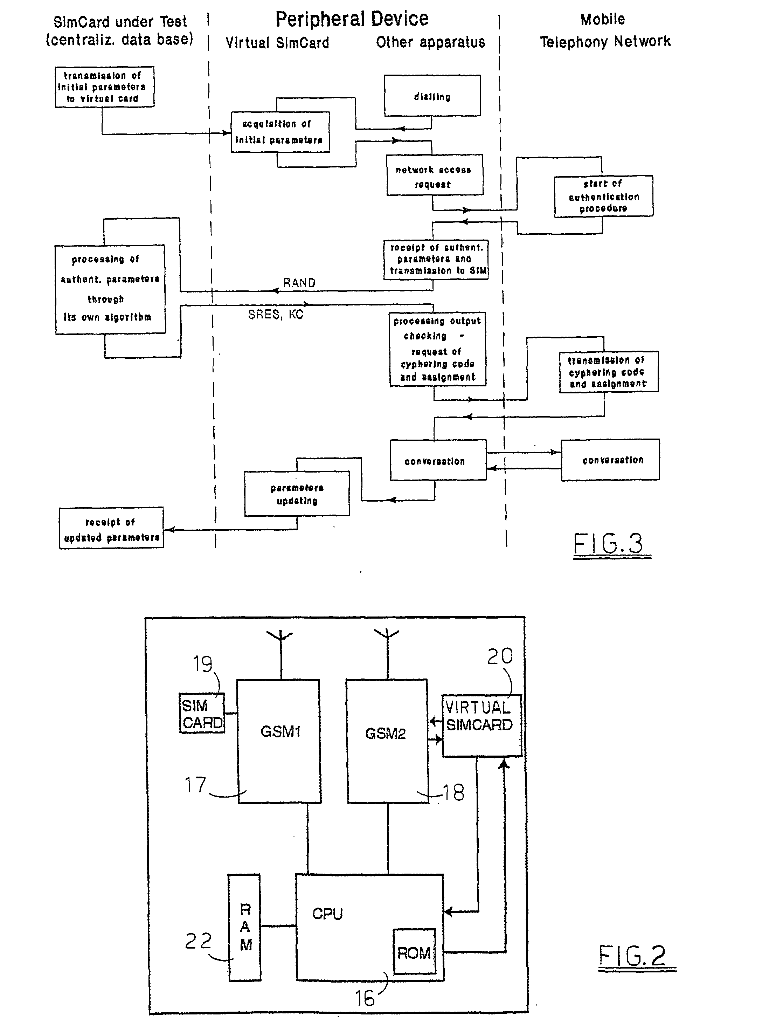

Peripheral devices, 13, are constituted, as we can see in the block diagram of fig.2, of a microcomputer unit, 16, and two modules, 17 and 18, which are the radio units of two mobile telephones. Each of said modules comprises whichever base function of a standard mobile telephone but doesn't comprise the user interfaces, such as keyboard, display, microphone and receiver.

In particular, one of said modules, 17, has a resident SIM card, as usually occurs in a standard mobile telephone, while the other module, 18, is connected to a memory unit, 20, which simulates the SIM card on which to execute the verifications, housed in the central electronic unit, 14. Said memory unit, 20, so acts as a virtual SIM card for module, 18.

The above described apparatus operates as follows.

Upon a specific verification request got to central electronic unit, 14, through one of the remote terminals, 15, said central unit performs a reading of the authentication parameters, such as IMSI, TMSI, or similars, stored in the SIM card on which to execute the verification, and transmits, both said parameters and instructions for executing the verification, to the device, 13, stated in the verification request. It has to be noticed that the above data are transmitted to the CPU, 16, or through dedicated digital lines, 21, other through the mobile telephony network by using module, 17, equipped with its own SIM card, 19.

CPU, 16, stores the above mentioned authentication parameters in the memory unit, 20, which module, 18, interfaces with during the verification. The verification start up time and the telephone number to dial for performing the verification are stored in the RAM unit, 22, of the CPU, 16.

So, this last one, at the fixed time, sends to module, 18, the data concerning the telephone number to dial, in order to begin the calling as it would happen if an operator dials the number by the keyboard of a mobile telephone including the SIM on which to execute the verification.

Once the calling has begun, module, 18, reads on the virtual card, 20, the parameters needed to start the authentication procedure; then it sends the access request, through the mobile telephony network, to the supplier which emitted the SIM card under verification; said supplier launches the authentication procedure for that specific card by sending to module, 18, some variables, RAND, which the SIM card under verification has to process according to a specific algorithm, stored in it.

To do this, CPU 16, transmits said variables, RAND, through module, 17, to the central electronic unit, 14, which, as above said, houses the specific SIM card storing the above specific authentication algorithm that, for secrecy reasons, could not be transmitted to the virtual card, 20, together with the other parameters previously transmitted from central electronic unit, 14, to periptheral device, 13.

Once RAND variables have been processed, the processing output, consisted of SRES (Signature Response) parameter, is transmitted from SIM card under verification to module, 18, still through the central electronic unit, 14, and through the auxiliary module, 17, which are to one another connected through the mobile telephony network. Together with said SRES parameter is also transmitted the KC (Key Cyphering) parameter, since module 18, once the SRES parameter has been verified to be the right one, sends said KC parameter to the SIM card manager to get the code needed to support the conversation; note that, in this embodiment of the invention, conversation represents the required type of phone communication among the available kinds of transmissions and services.

Finally, as last step before the conversation, module 18, just like whichever mobile phone would do while regularly working, asks to the service supplier, through the standard mobile telephony network, for the assignment, that is the right of managing the phone connection.

Once obtained said assignment, module 18 transmits a predefined vocal message, then, got the relating answer, shuts down the connection and updates the parameters stored in the virtual card 20.

The CPU unit, 16, of device, 13, reads, from the virtual card, 20, said updated parameters and transmits them to the SIM card housed in the central unit, 14, by means of the digital line, 21, or of the standard telephony network, using, in this second case, the module 17 of the device 13 itself.

All the above is schematically condensed in the flow chart of fig.3, where the three different "areas" or physically separated units which exchange data during the verification procedure are pointed out.

Said pointing out is helpful to understand that the apparatus, and corresponding method, proposed with the present invention, allows to verify the procedure to access the network from whichever location on the network area without the requirement that SIM cards on which to execute the verifications be phisically available at said locations. This is possible since, by the method of the invention, the only moment in which, during verification, access to the SIM card is required is when authentication parameters have to be processed through the card's own algorithm; and, by the method of the invention, the above access occurs upon phone connection between module 17 and central electronic unit 14 housing the card, phone connection which takes a few time that, anyway, in that specific phase of the authentication procedure, the procedure itself allows, as it happens every time a mobile telephone dials a calling.

The other moment in which, during an authentication procedure, access to the card is required is that one useful for acquiring the initial parameters, just after dialling; to do this the time amount allowed in a standard procedure is not enough to perform the acquisition through a phone connection. This problem is solved, as seen, by the apparatus of the invention, with the help of the virtual card, 20, where said initial parameters are stored before performing verification procedure and they are simply read from module 18, that thus employs the same time amount needed if the SIM card on which to execute the verification would be physically placed at the location of the verification.

Obviously the above limitations related to the connection time for acquiring whichever parameter needed during the authentication procedure do not exist if connection between central electronic unit, 14, and peripheral devices, 13, takes place through dedicated digital lines, 21; in fact, using this kind of lines, highly increased transmission speed, with respect to the radio transmission, can be reached. It has to be noted that, in this case, peripheral devices, 13, could be simplified since module, 17, radio transmitting and receiving, is no more needed, but, of course, with this solution the effectiveness and flexibility of the system would strongly decrease, because said devices could not be located wherever in the network area, but just where a telematic connection exists.

However, this last version of the peripheral devices may be provided and adopted, instead of the ones made according to the scheme of fig.2, in the locations of the network area where we can find digital lines such as TCP/IP or similar. In this case, the general advantages of the invention, represented by the capacity of automatically verifying the procedure to access the network through SIM cards even if said cards are not physically placed at the points of the network where verification is requested, are still safe.

Obviously further modifications and embodiments, different from the ones above shown as examples, can be provided generally considering that the most effectiveness of the apparatus and method of the invention is attained when peripheral devices 13 are apt to allow acquisition of the SIM card's parameters through phone connection.

The modifications may be carried out, anyway, within the limits of the invention as defined by the following claims.

## Claims

1. Apparatus for verifying the procedure to access mobile telephony networks through SIM cards, comprising
- a central electronic unit (14) where SIM cards on which to execute the verifications are stably placed, said central electronic unit providing means for, upon verification requests, reading parameters stored in the SIM card specified in said verification request, or processed according to algorithms stored in said SIM card, and means for transmitting said parameters to the peripheral devices (13) placed at the locations of the mobile telephony network specified in said verification requests;
- peripheral devices (13), connected, by means of dedicated telematic lines (21) or by telephony networks, to said central electronic unit, said peripheral devices providing means for working, upon reception of said parameters, as mobile telephones containing the specified SIM cards whose parameters have been transmitted to them;
**characterized in that** said peripheral devices (13) comprise
- a first module (17) and a second module (18), both receiving and transmitting through mobile telephony networks, said first module being equipped with a resident SIM card (19), said second module lacking a SIM card but being connected to a memory unit (20) operating as a virtual SIM card,
- a microcomputer unit (16) which can be connected to said central electronic unit (14) through dedicated telematic line (21) or through said first module (17).

2. Apparatus according to claim 1 wherein said microcomputer unit (16) comprises means for:
- receiving from said central electronic unit (14) data for performing verifications and parameters of the SIM card, specified in the verification request, housed in said central electronic unit,
- storing parameters of said SIM card in said memory unit (20),
- controlling, according to received data, said second module (18) for performing test callings and said first module (17) for performing auxiliary callings useful for acquiring and transmitting working SIM cards parameters,
- transmitting to said central electronic unit (14) the results of the verifications and the updated parameters of the SIM card specified in the verification request.

3. Apparatus according to claim 1 wherein said peripheral devices (13) comprise a module (18) transmitting and receiving through mobile telephony networks, said module lacking a SIM card but being connected to a memory unit (20) operating as a virtual SIM card, a microcomputer unit (16) which can be connected to said central electronic unit (14) through digital telematic line (21), said unit (16) providing means for:
- receiving from said central electronic unit (14) data for performing verifications and parameters of the SIM card, specified in the verification request, housed in said central electronic unit,
- storing parameters of said SIM card in said memory unit (20),
- controlling, according to received data, said module (18) for performing test callings,
- transmitting to said central electronic unit (14) the results of the verifications and the updated parameters of the SIM card on which the verification has been executed.

4. Method for verifying the procedure to access mobile telephony networks through SIM cards, comprising the steps of:
- housing the SIM cards on which to execute the verifications in a single central electronic unit (14);
- locating specific devices (13) at the points of the mobile telephony network where verifications are required, said peripheral devices being able to be connected to said central electronic unit through fixed or mobile telephony networks;
- receiving, by said central electronic unit, requests of verification of the procedure to access the network through specific SIM cards housed in said central unit, said requests being carried out through remote or local terminals (15) connected to said central unit (14);
- transmitting data concerning the verifications to be executed and specific initial parameters stored in said specific SIM cards, the transmission occurring from said central unit (14) towards the peripheral devices (13) stated in the verification requests;
- starting, by said peripheral devices, the verifications according to the received data and, at the same time, requiring further parameters processed according to algorithms stored in said specific SIM cards housed in said central unit (14);
- transmitting, from said central unit (14) to said peripheral devices (13), parameters processed according to algorithms stored in said specific SIM cards;
- completing, by said peripheral devices, the verifications of the procedure to access the network, said devices acting, upon reception of the above parameters, as mobile telephones containing the specific SIM cards whose parameters have been transmitted to them;
- transmitting the results of the verifications and the updated parameters of the SIM cards involved in the verifications to said central electronic unit (14) for storing said results and updating the parameters stored in said SIM cards housed in said central unit.

5. Method for verifying the procedure to access mobile telephony networks through SIM cards according to claim 4, wherein said transmission of data concerning the verifications to execute and of data concerning stored or processed parameters, from said central electronic unit (14) toward said peripheral devices (13), takes place by employing a first module (17), apt to transmit and receive through mobile telephony networks, included in said peripheral devices (13), and wherein said verifications execution takes place by employing a second module (18), apt to transmit and receive through mobile telephony networks, included in said peripheral devices (13), said first module (17) being equipped with a resident SIM card (19), said second module (18) lacking a SIM card but being connected to a memory unit (20) operating as a virtual SIM card.

## Patentansprüche

1. Vorrichtung zum Verifizieren der Prozedur zum Zugriff auf Funktelefonnetzwerke durch SIM-Karten, umfassend
- eine elektronische Zentraleinheit (14), wo SIM-Karten, auf denen die Verifikationen durchzuführen sind, stabil platziert sind, wobei die elektronische Zentraleinheit bereitstellt: Einrichtungen zum Lesen von Parametern bei Verifikationsaufforderungen, die in der SIM-Karte gespeichert sind, die in der Verifikationsaufforderung spezifiziert ist, oder die entsprechend in der SIM-Karte gespeicherten Algorithmen verarbeitet sind, und Einrichtungen zum Senden der Parameter zu den Peripheriegeräten (13), die an den Stellen des Funktelefonnetzwerks platziert sind, die in den Verifikationsaufforderungen spezifiziert sind;
- Peripheriegeräte (13), die mittels dedizierter Telematikleitungen (21) oder durch Fernsprechnetzwerke mit der elektronischen Zentraleinheit verbunden sind, wobei die Peripheriegeräte bereitstellen: Einrichtungen zum Arbeiten bei Empfang der Parameter als Funktelefone, die die spezifizierten SIM-Karten enthalten, deren Parameter zu ihnen gesendet worden sind;
**dadurch gekennzeichnet, dass** die Peripheriegeräte (13) umfassen
- ein erstes Modul (17) und ein zweites Modul (18), die beide durch Funktelefonnetzwerke empfangen und senden, wobei das erste Modul mit einer residenten SIM-Karte (19) ausgerüstet ist, wobei dem zweiten Modul eine SIM-Karte fehlt, es aber mit einer Speichereinheit (20) verbunden ist, die als eine virtuelle SIM-Karte arbeitet,
- eine Mikrocomputereinheit (16), die durch eine dedizierte Telematikleitung (21) oder durch das erste Modul (17) mit der elektronischen Zentraleinheit (14) verbunden sein kann.

2. Vorrichtung nach Anspruch 1, bei der die Mikrocomputereinheit (16) Einrichtungen umfasst zum:
- Empfangen von der elektronischen Zentraleinheit (14): Daten zur Ausführung von Verifikationen und Parameter der SIM-Karte, die in der Verifikationsaufforderung spezifiziert ist, die in der elektronischen Zentraleinheit untergebracht ist,
- Speichern von Parametern der SIM-Karte in der Speichereinheit (20),
- Steuern entsprechend empfangener Daten, wobei das zweite Modul (18) zur Ausführung von Testanrufen und das erste Modul (17) zur Ausführung von Hilfsanrufen nützlich sind, um Arbeits-SIM-Kartenparameter zu erfassen und zu senden,
- Senden zu der elektronischen Zentraleinheit (14): die Ergebnisse der Verifikationen und die aktualisierten Parameter der SIM-Karte, die in der Verifikationsaufforderung spezifiziert ist.

3. Vorrichtung nach Anspruch 1, bei der die Peripheriegeräte (13) umfassen: ein Modul (18), das durch Funktelefonnetzwerke sendet und empfängt, wobei dem Modul eine SIM-Karte fehlt, es aber mit einer Speichereinheit (20) verbunden ist, die als eine virtuelle SIM-Karte arbeitet, eine Mikrocomputereinheit (16), die mit der elektronischen Zentraleinheit (14) durch eine digitale Telematikleitung (21) verbunden sein kann, wobei die Einheit (16) Einrichtungen bereitstellt zum:
- Empfangen von der elektronischen Zentraleinheit (14): Daten zur Ausführung von Verifikationen und Parameter der SIM-Karte, die in der Verifikationsaufforderung spezifiziert ist, die in der elektronischen Zentraleinheit untergebracht ist,
- Speichern von Parametern der SIM-Karte in der Speichereinheit (20),
- Steuern des Moduls (18) zur Ausführung von Testanrufen entsprechend empfangener Daten,
- Senden zu der elektronischen Zentraleinheit (14): die Ergebnisse der Verifikationen und die aktualisierten Parameter der SIM-Karte, auf der die Verifikation durchgeführt worden ist.

4. Verfahren zum Verifizieren der Prozedur zum Zugriff auf Funktelefonnetzwerke durch SIM-Karten, umfassend die Schritte:
- Unterbringen der SIM-Karten, auf denen die Verifikationen durchzuführen sind, in einer einzigen elektronischen Zentraleinheit (14);
- Lokalisieren von speziellen Geräten (13) an den Punkten des Funktelefonnetzwerks, wo Verifikationen erforderlich sind, wobei die Peripheriegeräte mit der elektronischen Zentraleinheit durch Fest- oder Funktelefonnetzwerke verbunden werden können;
- Empfangen von Aufforderungen einer Verifikation der Prozedur zum Zugriff auf das Netzwerk durch spezielle SIM-Karten, die in der Zentraleinheit untergebracht sind, durch die elektronische Zentraleinheit, wobei die Aufforderungen durch entfernte oder lokale Terminals (15), die mit der Zentraleinheit (14) verbunden sind, durchgeführt werden;
- Senden von Daten betreffend die durchzuführenden Verifikationen und von in den speziellen SIM-Karten gespeicherten speziellen Anfangsparametern, wobei die Sendung von der Zentraleinheit (14) in Richtung auf die Peripheriegeräte (13) geschieht, die in den Verifikationsaufforderungen angegeben sind;
- Starten der Verifikationen entsprechend den empfangenen Daten durch die Peripheriegeräte und gleichzeitiges Anfordern weiterer Parameter, die entsprechend Algorithmen verarbeitet sind, die in den speziellen SIM-Karten gespeichert sind, die in der Zentraleinheit (14) untergebracht sind;
- Senden von Parametern, die entsprechend Algorithmen verarbeitet sind, die in den speziellen SIM-Karten gespeichert sind, von der Zentraleinheit (14) zu den Peripheriegeräten (13);
- Fertigstellen der Verifikationen der Prozedur zum Zugriff auf das Netzwerk durch die Peripheriegeräte, wobei die Geräte bei Empfang der obigen Parameter als Funktelefone wirken, die die speziellen SIM-Karten enthalten, deren Parameter zu ihnen gesendet worden sind;
- Senden der Ergebnisse der Verifikationen und der aktualisierten Parameter der SIM-Karten, die in den Verifikationen einbegriffen sind, zu der elektronischen Zentraleinheit (14), um die Ergebnisse zu speichern und die Parameter zu aktualisieren, die in den SIM-Karten gespeichert sind, die in der Zentraleinheit untergebracht sind.

5. Verfahren zum Verifizieren der Prozedur zum Zugriff auf Funktelefonnetzwerke durch SIM-Karten nach Anspruch 4, bei dem die Sendung von Daten betreffend die durchzuführenden Verifikationen und von Daten betreffend gespeicherte oder verarbeitete Parameter von der elektronischen Zentraleinheit (14) in Richtung auf die Peripheriegeräte (13) stattfindet, indem ein erstes Modul (17) verwendet wird, das geeignet ist, um durch Funktelefonnetzwerke zu senden und zu empfangen, das in den Peripheriegeräten (13) enthalten ist, und bei dem die Verifikationsdurchführung stattfindet, indem ein zweites Modul (18) verwendet wird, das geeignet ist, um durch Funktelefonnetzwerke zu senden und zu empfangen, das in den Peripheriegeräten (13) enthaten ist, wobei das erste Modul (17) mit einer residenten SIM-Karte (19) ausgerüstet ist, wobei dem zweiten Modul (18) eine SIM-Karte fehlt, es aber mit einer Speichereinheit (20) verbunden ist, die als eine virtuelle SIM-Karte arbeitet.

## Revendications

1. Appareili de vérification de la procédure d'accès à des réseaux de téléphonie mobile au moyen de cartes SIM, comprenant :
une unité électronique centrale (14) où les cartes SIM sur lesquelles on veut exécuter les vérifications sont placées de façon stable, la dite unité électronique centrale fournissant des moyens pour lire, lors de demandes de vérification, des paramètres stockés dans la carte SIM spécifiée dans la dite demande de vérification, ou traités conformément à des algorithmes stockés dans la dite carte SIM, et des moyens de transmission des dits paramètres aux dispositifs périphériques (13) placés aux endroits du réseau de téléphonie mobile spécifiés dans les dites demandes de vérification ;
des dispositifs périphériques (13) connectés, par des lignes télématiques dédiées (21) ou par des réseaux de téléphonie, à la dite unité électronique centrale, ces dispositifs périphériques fournissant des moyens pour fonctionner, lors de la réception des dits paramètres, comme téléphones mobiles contenant les cartes SIM spécifiées dont les paramètres leur ont été transmis ;
**caractérisé en ce que** les dits dispositifs périphériques (13) comprennent :
un premier module (17) et un deuxième module (18), tous deux recevant et émettant par l'intermédiaire de réseaux de téléphonie mobile, le dit premier module étant équipé d'une carte SIM résidente (19), le dit deuxième module ne possédant pas de carte SIM mais étant connecté à une unité de mémoire (20) fonctionnant comme une carte SIM virtuelle,
une unité de micro-ordinateur (16) qui peut être connectée à la dite unité électronique centrale (14) par une ligne télématique dédiée (21) ou par l'intermédiaire du dit premier module (17).

2. Appareil selon la revendication 1, dans lequel la dite unité de micro-ordinateur (16) comprend des moyens pour :
recevoir, en provenance de la dite unité électronique centrale (14), des données pour effectuer des vérifications et des paramètres de la carte SIM, spécifiée dans la demande de vérification, logée dans la dite unité électronique centrale,
stocker les paramètres de la dite carte SIM dans la dite unité de mémoire (20),
commander, conformément aux données reçues, le dit deuxième module (18) pour effectuer des appels de test et le dit premier module (17) pour effectuer des appels auxiliaires utiles pour acquérir et transmettre les paramètres de la carte SIM en service, et
transmettre à la dite unité électronique centrale (14) les résultats des vérifications et les paramètres mis à jour de la carte SIM spécifiée dans la demande de vérification.

3. Appareil selon la revendication 1, dans lequel les dits dispositifs périphériques (13) comprennent un module (18) émettant et recevant par l'intermédiaire de réseaux de téléphonie mobile, le dit module ne possédant pas une carte SIM mais étant connecté à une unité de mémoire (20) fonctionnant comme un carte SIM virtuelle, une unité de micro-ordinateur (16) qui peut être connectée à la dite unité électronique centrale (14) par une ligne télématique numérique (21), la dite unité (16) fournissant des moyens pour :
recevoir, en provenance de la dite unité électronique centrale (14), des données pour effectuer des vérifications et des paramètres de la carte SIM, spécifiée dans la demande de vérification, logée dans la dite unité électronique centrale ;
stocker les paramètres de la dite carte SIM dans la dite unité de mémoire (20) ;
commander, conformément aux données reçues, le dit module (18) pour effectuer des appels de test,
transmettre à la dite unité électronique centrale (14) les résultats des vérifications et les paramètres mis à jour de la carte SIM sur laquelle la vérification a été exécutée.

4. Procédé de vérification de la procédure d'accès à des réseaux de téléphonie mobile au moyen de cartes SIM, comprenant les étapes de :
logement des cartes SIM, sur lesquelles on veut exécuter les vérifications, dans une unité électronique centrale unique (14) ;
positionnement de dispositifs spécifiques (13) aux points du réseau de téléphonie mobile où des vérifications sont demandées, les dits dispositifs périphériques pouvant être connectés à la dite unité électronique centrale par l'intermédiaire de réseaux de téléphonie fixe ou mobile ;
réception, par la dite unité électronique centrale, de demandes de vérification de la procédure d'accès au réseau au moyen de cartes SIM spécifiques logées dans la dite unité centrale, les dites demandes étant effectuées par l'intermédiaire de terminaux distants ou locaux (15) connectés à la dite unité centrale (14) ;
transmission des données concernant les vérifications à exécuter et des paramètres initiaux spécifiques stockés dans les dites cartes SIM spécifiques, la transmission se produisant de la dite unité centrale (14) vers les dispositifs périphériques (13) indiqués dans les demandes de vérification ;
lancement, par les dits dispositifs périphériques, des vérifications conformément aux données reçues et, en même temps, demande d'autres paramètres traités conformément aux algorithmes stockés dans les dites cartes SIM spécifiques logées dans la dite unité centrale (14) ;
transmission, de la dite unité centrale (14) aux dits dispositifs périphériques (13), des paramètres traités conformément à des algorithmes stockés dans les dites cartes SIM spécifiques ;
achèvement, par les dits dispositifs périphériques, des vérifications de la procédure d'accès au réseau, les dits dispositifs agissant, à la réception des paramètres ci-dessus, comme téléphones mobiles contenant les cartes SIM spécifiques dont les paramètres leur ont été transmis ;
transmission des résultats des vérifications et des paramètres mis à jour des cartes SIM impliquées dans les vérifications à la dite unité électronique centrale (14) pour stocker les dits résultats et mettre à jour les paramètres stockés dans les dites cartes SIM logées dans la dite unité centrale.

5. Procédé de vérification de la procédure d'accès à des réseaux de téléphonie mobile par l'intermédiaire de cartes SIM selon la revendication 4, dans lequel la dite transmission de données concernant les vérifications à exécuter et de données concernant les paramètres stockés ou traités, de la dite unité électronique centrale (14) aux dits dispositifs périphériques (13), est effectuée au moyen d'un premier module (17), qui peut émettre et recevoir par l'intermédiaire de réseaux de téléphonie mobile, inclus dans les dits dispositifs périphériques (13), et dans lequel la dite exécution de vérifications a lieu au moyen d'un deuxième module (18), qui peut émettre et recevoir par l'intermédiaire de réseaux de téléphonie mobile, inclus dans les dits dispositifs périphériques (13), le dit premier module (17) étant équipé d'une carte SIM résidente (19), le dit deuxième module (18) ne possédant pas de carte SIM mais étant connecté à une unité de mémoire (20) fonctionnant comme une carte SIM virtuelle.
